# FASCICULE DE BREVET EUROPEEN

(11) **EP 0 813 000 B1**
(45) Date de publication et mention de la délivrance du brevet: **24.10.2001**
(21) Numéro de dépôt: 97109495.8
(22) Date de dépôt: 11.06.1997
(51) Int. Cl.: F16F 15/131, F16F 1/12, F16F 15/134

(54) **Procédé d'assemblage et de réglage des éléments d'un dispositif élastique d'amortissement**
Montageverfahren und Abstimmung von Teilen einer elastischen Dämpfungseinheit
Mounting method and adjustment of elements of an elastic damping unit

(30) Priorité: 14.06.1996 FR 9607436
(43) Date de publication de la demande: 17.12.1997
(73) Titulaire: VALEO, 75017 Paris (FR)
(72) Inventeur: Duclos, Didier, 77330 Ozoir-La-Ferriere (FR); Soares, Cesario, 28300 Fresnay Le Gilmert (FR)
(74) Mandataire: Gamonal, Didier

(56) Documents cités:
- WO-A-94/27062
- WO-A-95/28576
- WO-A-95/28578
- WO-A-95/28579

## Description

L'invention se rapporte à un procédé d'assemblage et de réglage des éléments d'un dispositif élastique d'amortissement entrant dans la constitution d'un double volant amortisseur; elle concerne plus particulièrement un perfectionnement permettant de mieux maîtriser les paramètres d'assemblage de ces éléments pour disposer d'une sécurité de fonctionnement accrue du double volant amortisseur.

On connaît, voir WO-A-94/27062, un double volant amortisseur comprenant deux masses tournantes coaxiales entre lesquelles sont rattachés, de façon articulée, des dispositifs élastiques d'amortissement régulièrement répartis circonférentiellement. De tels dispositifs sont orientés globalement radialement dans le double volant amortisseur lorsque les deux masses tournantes se trouvent en position stable l'une par rapport à l'autre, circonférentiellement. En fonctionnement, les décalages angulaires entre les deux masses entraînent une inclinaison des dispositifs élastiques d'amortissement par rapport à leurs directions radiales de repos respectives. Par conséquent les dispositifs élastiques s'allongent entre leurs points d'articulation aux deux masses tournantes.

Un dispositif élastique d'amortissement comporte un premier sous-ensemble formant un boîtier allongé et comprenant une première pièce d'articulation pour sa liaison à l'une des masses tournantes et un second sous-ensemble comprenant au moins un ressort hélicoïdal monté sur une tige munie d'une seconde pièce d'articulation pour son articulation à l'autre des masses tournantes, ce second sous-ensemble étant partiellement engagé dans le boîtier qui abrite notamment le ressort. Celui-ci prend appui entre une première butée située à une extrémité de la tige, engagée dans le boîtier et une seconde butée fixée à l'extrémité du boîtier opposée à ladite première pièce d'articulation.

Par conséquent, l'élongation du dispositif élastique d'amortissement se traduit par une compression du ressort à l'intérieur du boîtier.

Dans des conditions de fonctionnement extrêmes l'élongation des dispositifs d'amortissement peut amener les ressorts à spires jointives. Le couple peut alors se répartir très inégalement entre les différents dispositifs d'amortissement, pouvant entraîner la détérioration de l'un d'eux. L'invention permet d'éviter ce type d'incident.

Conformément à l'invention, ce problème est résolu par la partie caractérisante de la revendication 1.

Grâce à l'invention, on s'affranchit des tolérances de fabrication des diverses pièces et tous les ressorts viendront à spires jointives en même temps.

L'invention sera mieux comprise et d'autres avantages de celle-ci apparaîtront plus clairement à la lumière de la description qui va suivre, donnée uniquement à titre d'exemple et faite en référence aux dessins annexés dans lesquels :
- la figure 1 est une demi-vue en élévation, en coupe partielle, d'un double volant amortisseur équipé d'organes élastiques d'amortissement concernés par l'invention;
- la figure 2 est une coupe II-II de la figure 1;
- la figure 3 est une vue de détail illustrant un organe élastique d'amortissement du double volant amortisseur;
- la figure 4 représente l'un des sous-ensembles de ce dispositif élastique au cours du procédé de montage et de réglage;
- la figure 5 illustre la phase terminale de montage et de réglage de l'élément élastique;
- les figures 6 et 7 sont des vues analogues à la figure 5 illustrant différents cas possibles à l'issue du procédé de montage et de réglage;
- la figure 8 illustre une variante de montage des éléments du second sous-ensemble; et
- la figure 9 illustre l'opération finale du procédé selon cette variante.

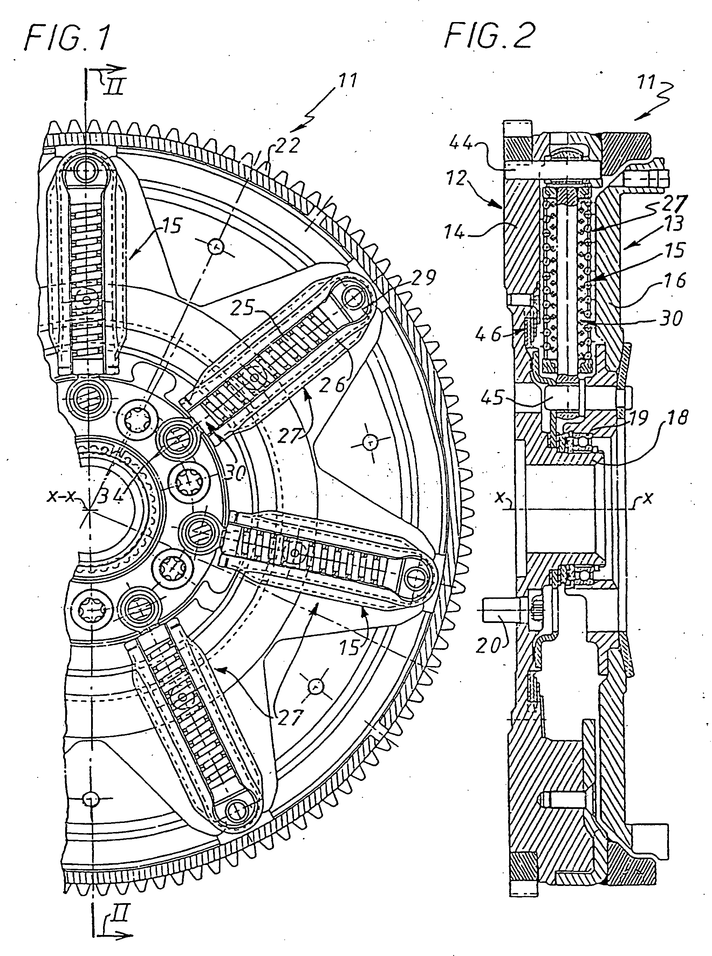

En se référant plus particulièrement aux figures 1 à 3, on a représenté un double volant amortisseur de torsion 11 portant deux masses tournantes coaxiales 12, 13 montées mobiles en rotation l'une par rapport à l'autre autour d'un axe commun de symétrie axiale x-x à l'encontre de moyens d'amortissement élastiques 17 comportant une série de dispositifs élastiques d'amortissement 15 d'orientation globalement radiale. La première masse 12 comporte essentiellement un plateau 14 et la seconde masse 13 comporte aussi un plateau 16 s'étendant parallèlement au plateau 12.

Les plateaux 14, 16 sont en matière moulable, typiquement en fonte, pour augmenter leur inertie.

La seconde masse tournante 13 est montée à rotation sur un moyeu tubulaire 18 de la première masse tournante 12. Ce moyeu est une pièce de forme générale cylindrique d'axe x-x, ici réalisé d'un seul tenant avec le plateau. Des moyens de palier, ici un roulement à billes 19 sont interposés entre la périphérie externe du moyeu 18 et la périphérie interne de la seconde masse tournante 13.

La seconde masse tournante 13 constitue le plateau de réaction d'un embrayage à friction qui n'est pas représenté. Pour connaître en détail l'agencement d'un embrayage à friction en association avec un double volant amortisseur de ce type, on peut par exemple se reporter au document FR-A-2 524 350.

La première massé tournante 12 est prévue pour être reliée par des vis 20 situées a sa périphérie interne à un arbre menant, non représenté, tel que le vilebrequin d'un moteur à combustion interne d'un véhicule automobile. La seconde masse tournante 13 est liée en rotation par l'intermédiaire de l'embrayage, à l'arbre d'entrée d'une boîte de vitesses, non représentée, du véhicule. La première masse tournante 12 porte à sa périphérie externe une couronne de démarreur 22 prévue pour être entraînée par le pignon d'un démarreur (non représenté) du moteur à combustion interne du véhicule automobile.

Comme indiqué ci-dessus, les moyens d'amortissement élastiques 17 comportent une pluralité de dispositifs élastiques d'amortissement 15 répartis régulièrement circonférentiellement. Les différents dispositifs d'amortissement sont disposés globalement radialement entre les deux plateaux 14, 16.

Chaque dispositif élastique 15 renferme au moins un ressort hélicoïdal 25a logé à l'intérieur d'un boîtier 26. Plus précisément, le dispositif élastique se divise en un premier sous-ensemble 27 formant ledit boîtier comprenant une première pièce d'articulation 29 et un second sous-ensemble 30 comprenant ledit ressort 25a, monté sur une tige 32 munie d'une seconde pièce d'articulation 34. Le ressort 25a prend appui entre une première butée 36 située à une extrémité de la tige 32 située à l'intérieur du boîtier 26 et une seconde butée 38 fixée à une extrémité 39 du boîtier 26 après assemblage des deux sous-ensembles.

Ladite première pièce d'articulation 29 forme une sorte de rotule immobilisée à une extrémité du boîtier 26 par la forme de ce dernier. Plus précisément, le boîtier 26 est constitué à partir d'une tôle pliée à la manière d'une épingle à cheveux autour de ladite rotule, avec formation de deux nervures longitudinales de raidissement 40. La rotule comporte un trou cylindrique 42 qui définit un axe d'articulation y-y. Elle est articulée à la première masse tournante 12 par un tourillon 44 matérialisant cet axe. Le tourillon 44 est implanté à la périphérie externe du plateau 14 en étant porté par celui-ci.

Le ressort 25a prend appui entre ladite première butée 36 soudée à l'extrémité de la tige et ladite seconde butée 38 comportant un palier à l'intérieur duquel ladite tige coulisse parallèlement à son axe longitudinal. La seconde butée 38 est fixée à l'extrémité 39 du boîtier 26 opposée à celle qui entoure la rotule. A l'extérieur du boîtier, la seconde pièce d'articulation 34 est munie d'un alésage cylindrique formant palier de rotation z-z. Un tourillon 45 riveté à la seconde masse tournante 13 est engagé dans ce palier. Le tourillon 45 est implanté à la périphérie interne de la deuxième masse 13.

Chaque dispositif d'amortissement 15 est ainsi monté articulé entre les première et seconde masses tournantes 129, 13 entre les deux axes y-y et z-z.

De par sa structure, chaque dispositif d'amortissement a tendance à ramener les deux masses tournantes 12, 13 dans une position relative prédéterminée pour laquelle sa longueur est minimum. Tout mouvement relatif circonférentiel entre les deux masses tournantes, se traduit par un allongement de chaque dispositif élastique aboutissant à la compression des ressorts.

En fait, comme représenté, chaque boîtier abrite deux ressorts coaxiaux 25a, 25b de raideurs différentes. Un dispositif de frottement à action axiale 46 est interposé entre les deux masses tournantes et constitue un dispositif d'hystérésis. Ce dernier ne fait pas partie de l'invention et ne sera donc pas décrit en détail.

Il ressort de la description qui précède que, si les dispositifs élastiques d'amortissement ne présentent pas tous la même élongation maximum correspondant au serrage à spires jointives des ressorts 25a et/ou 25b, l'un des dispositifs élastiques risque de supporter un effort excessif dans des conditions de fonctionnement extrêmes, c'est-à-dire lorsque le décalage angulaire entre les deux masses tournantes 12, 13 atteint sa valeur maximum.

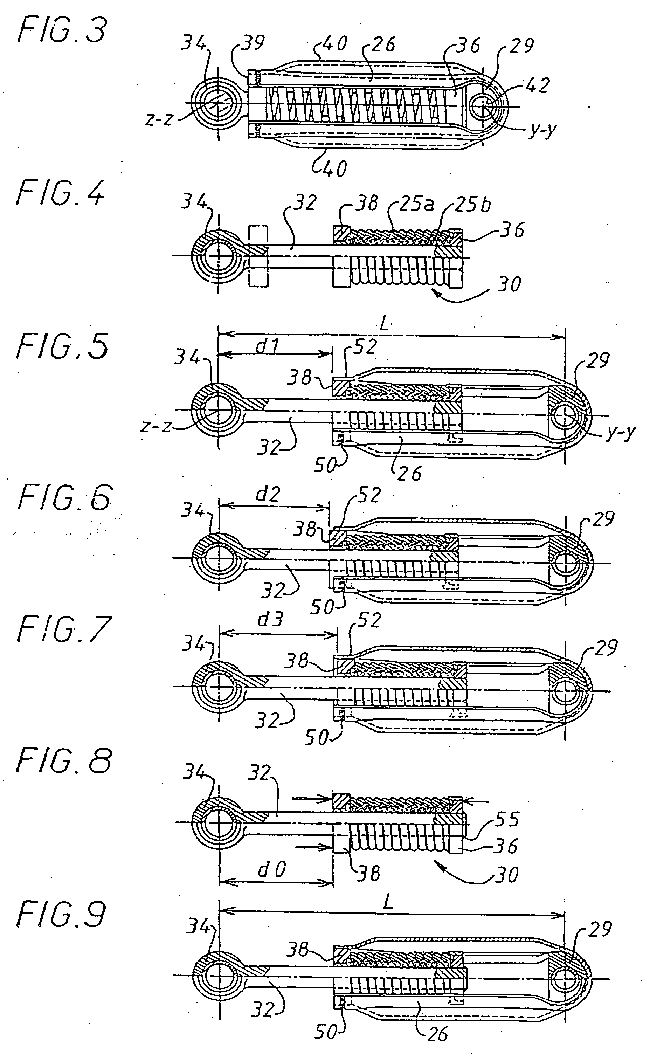

L'invention propose un procédé d'assemblage et de réglage des éléments d'un tel dispositif élastique d'amortissement permettant d'éliminer ce risque. Ce procédé va maintenant être explicité en référence aux figures 4 et 5.

Le principe général de ce procédé consiste à assembler les éléments d'un tel dispositif élastique 15 de façon que ce dernier présente une longueur prédéterminée L entre ses deux axes d'articulation y-y et z-z, pour son élongation maximum possible. De cette façon, lorsque les masses tournantes 12, 13 atteignent leur décalage angulaire maximum, tous les ressorts 25a et/ou 25b des différents dispositifs élastiques d'amortissement se bloquent à spires jointives en même temps, et les efforts se trouvent répartis entre les différents dispositifs élastiques d'amortissement.

Pour ce faire, au moment de l'assemblage des deux sous-ensembles, on comprime les ressorts à spires jointives en rapprochant au maximum les deux butées 36, 38 (figure 4) puis, on place le second sous-ensemble 30 dans cet état à l'intérieur du premier sous-ensemble 27, par exemple en bloquant provisoirement la butée 38 sur la tige 32, on règle l'entraxe entre les deux pièces d'articulation 29, 34 à ladite longueur prédéterminée L et on fixe, ici par soudure 50, ladite seconde butée 38 au boîtier 26, dans cette position. Comme représenté, la butée 38 présente une épaisseur suffisante pour venir s'adapter dans une portion d'extrémité 52 à surface cylindrique dudit boîtier.

Selon le premier mode d'exécution, ladite première butée 36 est préfixée, ici par soudage, à l'extrémité de la tige 32. Dans l'exemple de la figure 5, l'extrémité de la butée et l'extrémité du boîtier sont à affleurement, c'est-à-dire à la même distance dl de l'axe z-z. Cette situation optimale n'est pas toujours réalisée. Ainsi, dans le cas de la figure 6, la butée 52 est plus proche (distance d2) de l'axe z-z que l'extrémité du boîtier, tandis que dans le cas de la figure 7, la butée 52 est plus éloignée (distance d3) de l'axe z-z que l'extrémité du boîtier. C'est cette possibilité de décalage axial entre la butée et l'extrémité du boîtier qui permet, sans nuire à la soudure, de toujours ajuster l'entraxe entre les deux pièces d'articulation 29, 34 à la valeur L souhaitée.

Les figures 8 et 9 montrent une variante permettant de mieux maîtriser encore les opérations d'assemblage et de réglage.

En effet, selon cette variante, la première butée 36 est solidarisée à la tige 32 pendant les opérations d'assemblage et de réglage du second sous-ensemble 30. Plus précisément, on maintient la seconde butée 38 à une distance do prédéterminée de la seconde pièce d'articulation 34. On comprime le ressort à spires jointives en faisant coulisser la première butée 36 sur la tige en direction de la seconde butée et on fixe par soudure 55 ladite première butée à la tige. On est alors ramené au cas précédent qui consiste à engager le second sous-ensemble comprimé dans le boîtier et à fixer par soudure 50 la seconde butée 38 au boîtier 26 après avoir réglé l'entraxe des deux pièces d'articulation à la longueur L prédéterminée.

Bien entendu, le boîtier 26 peut avoir une autre forme et comporter un fourreau partout à solidarisation la première pièce d'articulation.

La seconde butée 38 est alors soudé à l'extrémité libre du fourreau apposée à la première pièce d'articulation 29.

## Revendications

1. Procédé d'assemblage et de réglage des éléments d'un dispositif élastique d'amortissement (15) pour double volant amortisseur, de tels dispositifs étant destinés à être rattachés et articulés entre deux masses tournantes (12, 13) en étant orientés globalement radialement, chaque dispositif présentant à cet effet un axe d'articulation (y-y, z-z) à chacune de ses extrémités, chaque dispositif élastique (15) comportant un premier sous-ensemble (27) formant boîtier allongé comprenant une première pièce d'articulation (29) et un second sous-ensemble (30) comprenant au moins un ressort hélicoïdal (25a, 25b) monté sur une tige (32) munie d'une seconde pièce d'articulation (34) et ledit ressort prenant appui entre une première butée (36) située à une extrémité de ladite tige et une seconde butée (38) fixée à une extrémité dudit boîtier après assemblage des deux sous-ensembles, **caractérisé en ce qu'**il consiste à comprimer au maximum ledit ressort (25a, 25b) de façon à l'amener à spires jointives, à placer ledit second sous-ensemble (30) à l'intérieur du premier dans cet état, à régler le dispositif élastique à une longueur prédéterminée (L) entre les axes des deux pièces d'articulation (29,34), pour son élongation maximum possible, et à fixer (50) ladite seconde butée (38) audit boîtier (26) dans cette position.

2. Procédé selon la revendication 1, **caractérisé en ce que** ladite première butée (36) étant préfixée à l'extrémité correspondante de ladite tige, il consiste après compression à spires jointives dudit ressort, à positionner les deux sous-ensembles l'un dans l'autre et à ajuster ladite longueur prédéterminée (L) avant de fixer ladite seconde butée (38) à une portion d'extrémité dudit boîtier dans laquelle elle s'adapte.

3. Procédé selon la revendication 1, **caractérisé en ce qu'**il consiste à maintenir ladite seconde butée (38) à une distance prédéterminée (do) de ladite seconde pièce d'articulation, à comprimer ledit ressort à spires jointives en faisant coulisser ladite première butée (36) sur ladite tige (32) en direction de ladite seconde butée et à fixer (55) ladite première butée (36) à ladite tige avant de fixer ladite seconde butée (38) audit boîtier.

4. Procédé selon l'une des revendications précédentes, **caractérisé en ce qu'**on fixe ladite première et/ou seconde butée par soudure.

## Patentansprüche

1. Verfahren zur Zusammenfügung und Einstellung der Elemente einer elastischen Dämpfungsvorrichtung (15) für ein Zweimassen-Dämpfungsschwungrad, wobei derartige Vorrichtungen zur Anfügung und Anlenkung zwischen zwei rotierenden Massen (12, 13) bestimmt und insgesamt radial ausgerichtet sind, wobei jede Vorrichtung dazu eine Gelenkachse (y-y, z-z) an jedem ihrer Enden aufweist, wobei jede elastische Vorrichtung (15) eine erste Untergruppe (27), die ein langgestrecktes Gehäuse mit einem ersten Gelenkteil (29) bildet, und eine zweite Untergruppe (30) umfaßt, die wenigstens eine Schraubenfeder (25a, 25b) enthält, die an einem Stift (32) angebracht ist, der mit einem zweiten Gelenkteil (34) versehen ist, und wobei die besagte Feder zwischen einem an einem Ende des besagten Stifts befindlichen ersten Anschlag (36) und einem zweiten Anschlag (38) zur Anlage kommt, der nach der Zusammenfügung der beiden Untergruppen an einem Ende des besagten Gehäuses befestigt ist,
**dadurch gekennzeichnet,**
**daß** es darin besteht, die besagte Feder (25a, 25b) maximal zusammenzudrücken, so daß ihre Windungen aneinanderstoßen, die besagte zweite Untergruppe (30) im Innern der ersten Untergruppe in diesem Zustand einzusetzen, die elastische Vorrichtung auf eine vorbestimmte Länge (L) zwischen den Achsen der zwei Gelenkteile (29, 34) für ihre größtmögliche Streckung einzustellen und den besagten zweiten Anschlag (38) an dem besagten Gehäuse (26) in dieser Position zu befestigen (50).

2. Verfahren nach Anspruch 1, **dadurch gekennzeichnet, daß** es, insoweit der besagte erste Anschlag (36) an dem entsprechenden Ende des besagten Stifts vorbefestigt ist, nach dem Zusammendrücken der besagten Feder mit aneinanderstoßenden Windungen darin besteht, die zwei Untergruppen ineinander zu positionieren und die besagte vorbestimmte Länge (L) einzustellen, bevor der besagte zweite Anschlag (38) an einem Endabschnitt des besagten Gehäuses, in dem er sich einpaßt, befestigt wird.

3. Verfahren nach Anspruch 1, **dadurch g ekennzeichnet,** daß es darin besteht, den besagten zweiten Anschlag (38) in einem vorbestimmten Abstand (d0) von dem besagten zweiten Gelenkteil zu halten, die besagte Feder mit aneinanderstoßenden Windungen zusammenzudrücken, indem der besagte erste Anschlag (36) auf dem besagten Stift (32) in Richtung des besagten zweiten Anschlags verschoben wird, und den besagten ersten Anschlag (36) an dem besagten Stift zu befestigen, bevor der besagte zweite Anschlag (38) an dem besagten Gehäuse befestigt wird.

4. Verfahren nach einem der vorangehenden Ansprüche, **dadurch gekennzeichnet, daß** der besagte erste und/oder zweite Anschlag durch Verschweißung befestigt wird.

## Claims

1. A method for the assembly and adjustment of elements of an elastic damping device (15) for a double damping flywheel, such devices being adapted to be attached and articulated between two rotating masses (12, 13), being oriented generally radially, each device having for this purpose an articulation axis (y-y, z-z) at each of its ends. each elastic device (15) comprising a first sub-assembly (27) defining an elongate housing which includes a first articulating member (29), and a second sub-assembly (30) including at least one helical spring (25a, 25b) which is mounted on a rod (32) furnished with a second articulating member (34), and the said spring being engaged between a first abutment (35) situated at one end of the said rod and a second abutment (38) fixed to one end of the said housing after the two sub-assemblies have been assembled together, **characterised in that** it consists in compressing the said spring (25a, 25b) by the maximum amount so as to bring its turns into mutual contact, placing the said second sub-assembly (30) inside the first one in this state, adjusting the elastic device to a predetermined length (L) between the axes of the two articulating members (29, 34) whereby to elongate it by the maximum possible amount, and fixing (50) the said second abutment (38) to the said housing (26) **in that** position.

2. A method according to Claim 1, **characterised in that**, the said first abutment (36) being fixed beforehand to the corresponding end of the said rod, it consists, after the said spring is compressed into mutual engagement of its turns, in positioning the two sub-assemblies one inside the other and adjusting the said predetermined length (L) before fixing the said second abutment (38) to an end portion of the said housing, into which it adapts itself.

3. A method according to Claim 1, **characterised in that** it consists in maintaining the said second abutment (38) at a predetermined distance (do) from the said second articulating member, compressing the said spring into mutual engagement of the turns by causing the said first abutment (36) to slide on the said rod (32) towards the said second abutment, and fixing (55) the said first abutment (36) to the said rod before fixing the said second abutment (36) to the said housing.

4. A method according to one of the preceding Claims, **characterised in that** the said first and/or second abutment is fixed by welding.
